# EUROPÄISCHE PATENTSCHRIFT

(11) **EP 2 570 290 B1**
(45) Veröffentlichungstag und Bekanntmachung des Hinweises auf die Patenterteilung: **18.06.2014**
(21) Anmeldenummer: 11181601.3
(22) Anmeldetag: 16.09.2011
(51) Int. Cl.: B60L 3/00

(54) **Antriebssystem eines batteriebetriebenen Fahrzeugs mit einer stromrichtergespeisten permanent erregten Synchronmaschine**
Drive system of a battery-operated vehicle with a frequency converter fed permanently excited synchronous machine
Système d'entraînement d'un véhicule fonctionnant sur batterie doté d'une machine synchrone à excitation permanente alimentée par convertisseur

(43) Veröffentlichungstag der Anmeldung: 20.03.2013
(73) Patentinhaber: Siemens Aktiengesellschaft, 80333 München (DE)
(72) Erfinder: Schwesig, Günter, 91054 Erlangen (DE); Schierling, Hubert, 91052 Erlangen (DE); Walders, Hanno, 91056 Erlangen (DE)

(56) Entgegenhaltungen:
- EP-A1- 2 338 752
- DE-A1-102008 045 247
- US-B1- 6 975 085

## Beschreibung

Die Erfindung bezieht sich auf ein Antriebssystem eines batteriebetriebenen Fahrzeugs.

Aus der DE 10 2009 044 281 A1 ist ein Antriebssystem eines batteriebetriebenen Fahrzeugs bekannt und in FIG 1 näher dargestellt. In diesem Blockschaltbild eines mit 2 bezeichneten bekannten Antriebssystems sind mit 4 ein Energiespeicher, mit 6 ein bidirektionaler Gleichspannungs-Wandler, mit 8 ein selbstgeführter Stromrichter, der auch Pulsstromrichter bezeichnet wird, mit 10 eine Antriebsmaschine, insbesondere eine permanent erregte Synchronmaschine, und mit 12 ein Antriebsrad bzw. eine Antriebsachse des batteriebetriebenen Fahrzeugs bezeichnet. Der bidirektionale Gleichspannungswandler 6, mit dem die Spannung des Energiespeichers 4, der beispielsweise ein Akkumulator ist, in eine Gleichspannung des Pulsstromrichters 8 gewandelt wird, weist dazu zwei elektrisch in Reihe geschaltete abschaltbare Halbleiter T8 und T10, insbesondere Insulated-Gate-Bipolar-Transistoren (IGBT) auf, deren Verbindungspunkt 14 mittels einer Drossel 16 mit einem Plus-Anschluss des Energiespeichers 4 elektrisch leitend verbunden ist. Ausgangsseitig weist dieser bipolare Gleichspannungs-Wandler 6 einen Pufferkondensator 18 auf, mit dem deren Ausgangsspannung geglättet und gepuffert wird. Zur Verbindung der beiden Ausgangs-Anschlüsse des bidirektionalen Gleichspannungs-Wandlers 6 mit korrespondierenden gleichspannungsseitigen Anschlüssen DC+, DC- des selbstgeführten Stromrichters 8 sind zwei Stromschienen 20 und 22 vorgesehen. Die Stromschiene 20 wird auch als positive Gleichspannungsschiene, die Stromschiene 22 als negative Gleichspannungsschiene bezeichnet. Damit diese Verbindung möglichst niederinduktiv ist, sind diese beiden Stromschienen 20 und 22 mit einem möglichst geringen Abstand zueinander verlegt. Der selbstgeführter Stromrichter 8 ist dreiphasig ausgeführt, da als Antriebsmaschine 10 eine dreiphasige permanent erregte Synchronmaschine vorgesehen ist. Dieser selbstgeführte Stromrichter 8 weist drei Halbbrücken auf, die elektrisch parallel zu den gleichspannungseitigen Anschlüssen DC+ und DC- dieses selbstgeführten Stromrichters 8 geschaltet sind und die jeweils zwei in Reihe geschaltete abschaltbare Leistungshalbleiter T1, T2 bzw. T3, T4 bzw. T5, T6 aufweisen. Als abschaltbare Leistungshalbleiter T1, ..., T6 sind IGBTs vorgesehen, weshalb dieser selbstgeführte Stromrichter 8 auch als IGBT-Pulsstromrichter bezeichnet wird. Jeweils ein Verbindungspunkt zweier abschaltbarer Leistungshalbleiter T1, T2 bzw. T3, T4 bzw. T5, T6 bilden einen wechselspannungsseitigen Anschluss R bzw. S bzw. T des selbstgeführten Stromrichters 8. Die Antriebsmaschine 10 weist drei Ständerwicklungen Lₐ, L_{b} und L_{c} auf, die elektrisch in Stern geschaltet sind und deren freien Enden jeweils einen ständerseitigen Anschluss U,V,W bilden. Jeder wechselspannungsseitige Anschluss R,S und T des IGBT-Pulsstromrichters 8 ist mit einem zugehörigen ständerseitigen Anschluss U,V und W der Antriebsmaschine 10 elektrisch leitend verbunden. Der Rotor dieser Antriebsmaschine 10 ist mechanisch mit dem Antriebsrad 12 bzw. der Antriebsachse 12 des batteriebetriebenen Fahrzeugs verbunden. Zur Steuerung der abschaltbaren Leistungshalbleiter T1,...,T6 des IGBT-Pulsstromrichters 8 und der abschaltbaren Leistungshalbleiter T8 und T10 des bidirektionalen Gleichspannungs-Wandlers 6 ist eine Steuer- und Regeleinrichtung 24 vorgesehen.

Aus der DE 10 2006 060 053 A1 ist ein Antriebssystem eines batteriebetriebenen Fahrzeugs bekannt, das keinen bidirektionalen Gleichspannungs-Wandler 6 aufweist. Bei diesem Antriebssystem sind der Energiespeicher 4 und der Pufferkondensator 18 elektrisch parallel zu den gleichspannungsseitigen Anschlüssen DC+ und DC- des selbstgeführten Stromrichters 8 geschaltet. Ansonsten besteht kein weiterer Unterschied zum Antriebssystem 2 der DE 10 2009 044 281 A1.

Aus der US 6 975 085 B1 ist eine elektronische Motorbremse bekannt, welche einen Bremsschaltkreis mit ein oder mehreren elektrischen Entladungseinrichtungen an einer oder an mehreren Versorgungsleitungen einer Stromversorgung zum Antreiben eines elektronisch kommutierten Gleichstrommotors aufweist. Diese elektronische Motorbremse beinhaltet eine Aktivierungsschaltung, welche im Bremsfall die elektronischen Schalter des Bremsschaltkreises ansteuert und somit die darin enthaltenen Entladungseinrichtungen zum Bremsen des Motors aktiviert. Eine spezifische Ausführungsform der Entladungseinrichtung im Bremsschaltkreis der elektronischen Motorbremse ist der Kurzschluss der Versorgungsleitungen, also der ständerseitigen Anschlüsse des elektronisch kommutierten Gleichstrommotors, mittels der in Sternschaltung angeordneten und einen Sternpunkt bildenden elektronischen Schalter.

Aus der DE 10 2008 045 247 A1 ist eine Vorrichtung zum Umwandeln von Elektroenergie in Wärme im Bereich der Antriebsund/oder Hochspannungstechnik mit einem Bremswiderstand und wenigstens einem ansteuerbaren Bremsleistungshalbleiter zum Steuern der Umwandlung bekannt, die im Bedarfsfall eine schnelle und kostengünstige Überführung von Wirkleistung in Wärme ermöglicht. Der Bremswiderstand weist dafür mehrere Einzelbremswiderstände, welche jeweils Teil eines bipolaren Submoduls sind. Diese Submodule werden unter Ausbildung einer Submodulreihenschaltung in Reihe geschaltet und weisen zumindest teilweise einen Energiespeicher in Parallelschaltung zu jeweils einem zugeordneten Einzelbremswiderstand und einen steuerbaren Bremsleistungshalbleiter auf. Der Bremsleistungshalbleiter ermöglicht in der Bremsstellung den Stromfluss mittels des jeweils zugeordneten Einzelbremswiderstands und unterbricht diesen in der Normalbetriebsstellung.

Aus der EP 2 338 752 A1 ist ein elektrisches Fahrzeug bekannt, dessen elektrischer Antrieb ein Antriebsrad, welches von einem elektrischen Traktionsmotor angetrieben wird, eine Bremsbefehlsvorrichtung, die von einem Fahrer betätigt wird und eine Bremslöseeinheit aufweist. Die Bremslöseeinheit wiederum weist eine elektromagnetische Bremse auf, welcher mittels Elektrizitätszufuhr betrieben wird. Der Antrieb wird gestoppt, indem die Elektrizitätszufuhr der elektromechanischen Bremse unterbrochen wird, um die Drehung der Drehwelle des elektrischen Traktionsmotors zu blockieren. Eine weitere Möglichkeit ist, mittels einer Kurzschlussbremsvorrichtung die Versorgungsleitung des Traktionsmotors unter Verwendung von mechanischen Schaltern in einer Sternschaltung, welche an den elektrischen Phasen zwischen Inverter und Traktionsmotor angeschlossen ist, kurzzuschließen.

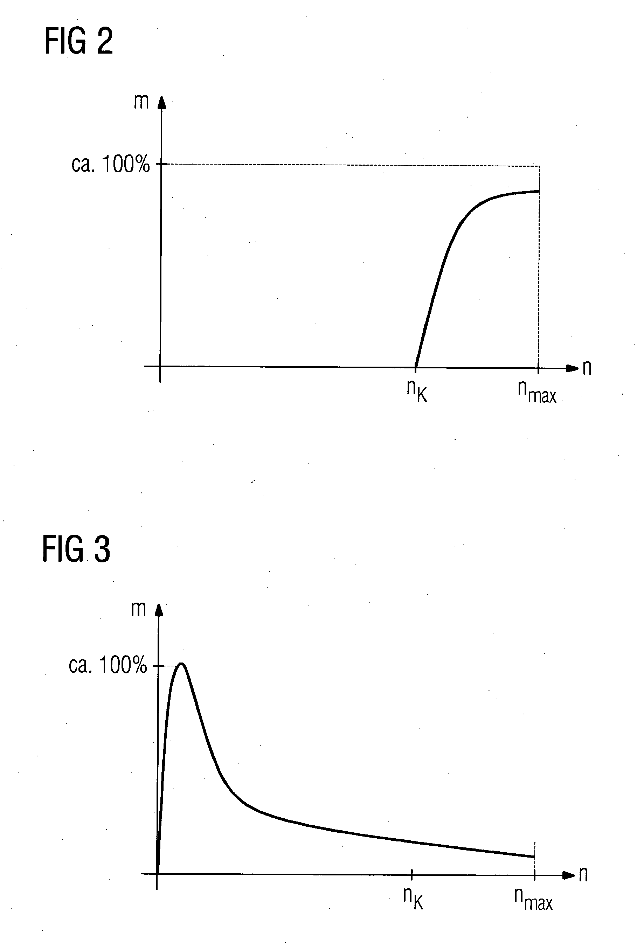

Beim Betrieb der permanent erregten Synchronmaschine 10, insbesondere im Feldschwächbetrieb, entsteht durch Ausfall des selbstgeführten Stromrichters 8 oder durch Ausfall der Steuer- und Regeleinrichtung 24 durch Energierückspeisung über die Freilaufdioden V1,...,V6 des selbstgeführten Stromrichters 8 in den Energiespeicher 4 oder in einen nicht näher dargestellten Bremswiderstand ein Bremsmoment, dessen Verlauf im Diagramm der FIG 2 näher dargestellt ist. Dieses Bremsmoment setzt beispielsweise bei maximaler Drehzahl nₘₐₓ mit maximaler Amplitude ein und nimmt mit kleiner werdender Drehzahl n ab. Dieses Bremsmoment wird Null, wenn die elektromotorische Kraft (EMK) der Antriebsmaschine 10 durch Abnahme der Drehzahl n entsprechend klein gegenüber einer an den gleichspannungsseitigen Anschlüssen DC+ und DC- des selbstgeführten Stromrichters 8 anstehenden Gleichspannung geworden ist. Neben diesem Verlauf des Bremsmoments kann zusätzlich eine Überspannung entstehen, die den selbstgeführten Stromrichter 8 oder andere an den Gleichspannungs-Stromschienen 20 und 22 angeschlossenen Vorrichtungen zerstören kann.

Bei einem batteriebetriebenen Fahrzeug ist ein derartiges Bremsmoment nicht erwünscht und wird auch nicht akzeptiert, da der Fahrzeuglenker eines derartigen batteriebetriebenen Fahrzeugs von diesem Betriebszustand völlig überrascht wird. Ein Bremsen wird ausschließlich vom Fahrzeuglenker eingeleitet und gesteuert. Ein derartig plötzlich auftretendes Bremsmoment kann außerdem dazu führen, dass das batteriebetriebene Fahrzeug ausbricht mit der Folge der Beschädigung bzw. der Zerstörung des Fahrzeugs und anderer Fahrzeuge und unter Umständen mit der Folge der Verletzung des oder der Fahrzeuglenker(s). Um im Fehlerfall des selbstgeführten Stromrichters 8 oder seiner Steuer- und Regeleinrichtung 24 des Antriebssystems 2, wobei die permanent erregte Synchronmaschine 10, insbesondere im Feldschwächbetrieb betrieben wird, Überspannungen und Bremsmomente zu beherrschen, wird der selbstgeführte Stromrichter 8 derart gesteuert, dass der Betriebszustand "Ankerkurzschluss" eintritt. Bei diesem Betriebszustand werden die oberen oder die unteren abschaltbaren Leistungshalbleiter T1,T3,T5 oder T2,T4,T6 leitend geschaltet, wodurch die Ständerwicklungen Lₐ, L_{b} und L_{c} der permanent erregten Synchronmaschine 10 kurzgeschlossen sind. Dadurch wird eine vorhandene kinetische Energie dieser Synchronmaschine 10 über die Ständerwicklung Lₐ,L_{b} und L_{c} in Wärme umgesetzt. Dadurch kann diese kinetische Energie nicht mehr in elektrische Energie umgewandelt werden, die dann zu Überspannungen führt. Mittels eines derartig gesteuerten Ankerkurzschlusses wird im Fehlerfall eine Notbremsung eingeleitet. Ein Drehmomentverlauf eines mittels eines Ankerkurzschlusses erzeugten Bremsmomentes ist im Diagramm der FIG 3 näher dargestellt. Diesem Verlauf ist zu entnehmen, dass bei maximaler Drehzahl nₘₐₓ das Bremsmoment mit minimaler Amplitude einsetzt und mit Verringerung der Drehzahl n ansteigt. Bei kleinen Drehzahlen steigt die Amplitude dieses Bremsmoment sehr schnell auf seinen maximalen Wert an und fällt danach bis zur Drehzahl n=0 sehr schnell.

Um im Fehlerfall ein hohes Bremsmoment (FIG 2) zu verringern, ist es naheliegend, einen Ankerkurzschluss zu schalten. Da im Fehlerfall des selbstgeführten Stromrichters bzw. der Steuerund Regeleinrichtung dieses selbstgeführten Stromrichters zur Generierung eines Ankerkurzschlusses ausfällt, kann ein Ankerkurzschluss nur mittels einer externen Vorrichtung eingeleitet werden.

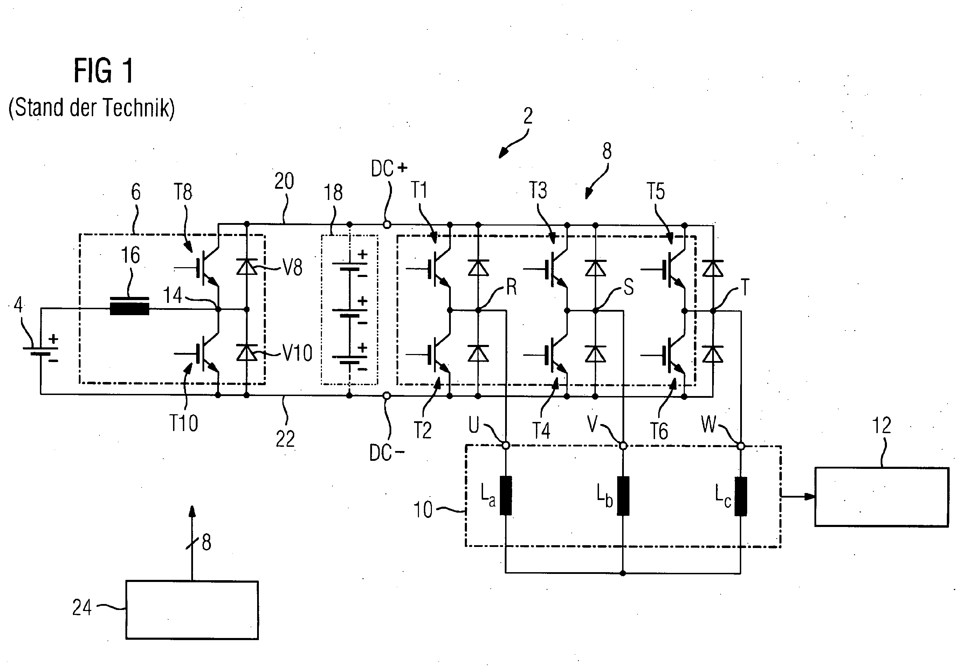

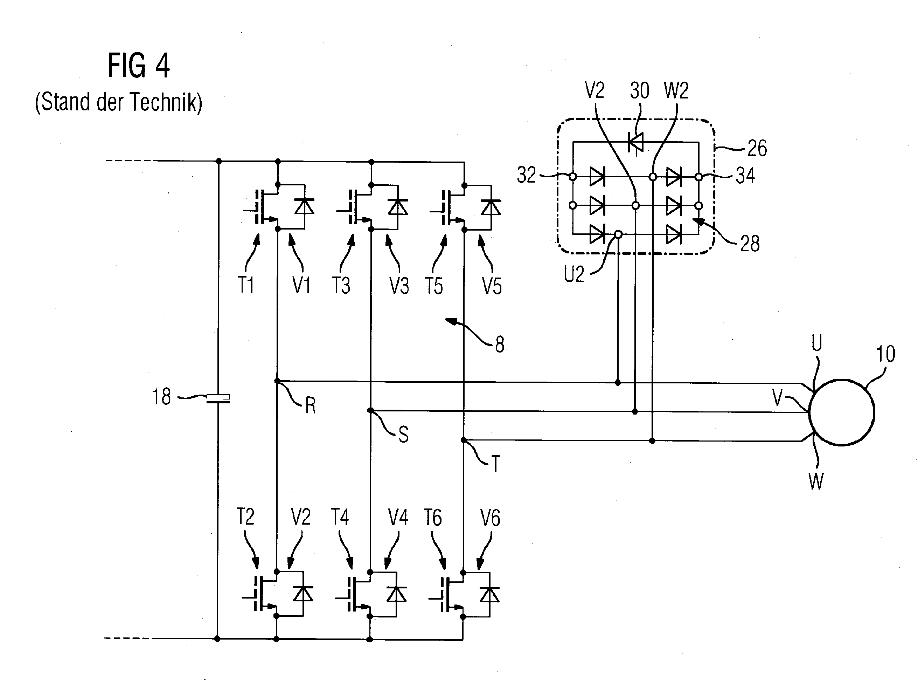

In der FIG 4 ist eine Vorrichtung 26 zum Generieren eines externen Ankerkurzschlusses bei einem Antriebssystem 2 nach FIG 1 näher dargestellt, bei dem aus Gründen der Übersichtlichkeit nur der selbstgeführte Stromrichter 8, der Pufferkondensator 18 und die permanent erregte Synchronmaschine 10 dargestellt sind. Diese Vorrichtung 26 weist eine 6-pulsige Diodenbrücke 28 und einen Thyristor 30 auf. Jeweils zwei in Reihe geschaltete Dioden bilden einen wechselspannungsseitigen Anschluss U2 bzw. V2 bzw. W2. Diese drei Reihenschaltungen jeweils zweier Dioden sind elektrisch parallel geschaltet und bilden zwei gleichspannungsseitige Anschlüsse 32 und 34, zu denen der Thyristor 30 derart geschaltet ist, dass sein Kathodenanschluss mit dem Anschluss 32 und sein Anodenanschluss mit dem Anschluss 34 der 6-pulsigen Diodenbrücke 28 elektrisch leitend verbunden ist. Die wechselspannungsseitigen Anschlüsse U2, V2 und W2 der Vorrichtung 26 sind mit korrespondierenden ständerseitigen Anschlüssen U, V und W der permanent erregten Synchronmaschine 10 elektrisch leitend verbunden.

Im Fehlerfall wird der Thyristor 30 gezündet, wodurch dieser die beiden gleichspannungsseitigen Anschüsse 32 und 34 miteinander elektrisch leitend verbindet. Dadurch wird die 6-pulsige Diodenbrücke 28 gleichspannungsseitig kurzgeschlossen. Da an den wechselspannungsseitigen Anschlüssen U2, V2 und W2 der 6-pulsigen Diodenbrücke 28 die ständerseitigen Anschlüsse U,V und W der permanenterregten Synchronmaschine 10 angeschlossen sind, werden die Ständerwicklungen Lₐ, L_{b} und L_{c} dieser Synchronmaschine 10 kurzgeschlossen. Ein Thyristor 30 kann mittels einer Löschschaltung wieder ausgeschaltet werden. Ebenfalls erlischt ein gezündeter Thyristor 30, wenn er einen Wechselstrom führt. Sobald der Strom durch Null geht (Vorzeichenwechsel), erlischt der Thyristor 30. Da an den gleichspannungsseitigen Anschlüssen 32 und 34 der 6-pulsigen Diodenbrücke 28 eine Gleichspannung ansteht, erlischt der Thyristor 30 erst dann, wenn diese Gleichspannung Null geworden ist. Somit generiert diese Vorrichtung 26 einen Bremsmomentenverlauf wie der Verlauf im Diagramm der FIG 3.

Wird kein externer Ankerkurzschluss geschaltet, ist das Bremsmoment gemäß dem Diagramm der FIG 2 bei einer Drehzahl n_{K} wieder Null. Das heißt, bei Drehzahlen n, die kleiner der Drehzahl n_{K} sind, ist kein Bremsmoment mehr wirksam. Bei dem Verlauf des Bremsmoments gemäß dem Diagramm FIG 3 ist dieses noch wirksam, wobei sein maximaler Wert erst bei sehr kleinen Drehzahlen erreicht wird. Dadurch wird wieder ein batteriebetriebenes Fahrzeug ohne Zutun des Fahrzeuglenkers annähernd bis zum Stillstand abgebremst, wobei bei einer kleinen Geschwindigkeit sehr stark gebremst wird. Ein derartiges Verhalten ist von nachfolgenden Fahrzeugen schwer einschätzbar, erst recht, wenn diese Situation nicht verkehrsbedingt verursacht worden ist.

Somit ist es wünschenswert, bei Drehzahlen n ≤ n_{K} den externen Ankerkurzschluss wieder aufzuheben. Dies ist aber mit der Vorrichtung 26 nicht möglich, da ohne eine zusätzliche Löschschaltung für den Thyristor 30 dieser nicht zu einem vorbestimmten Zeitpunkt ausgeschaltet werden kann. Eine derartige Löschschaltung würde die Vorrichtung 26 aufwändiger machen und diese würde durch zusätzliche Verlustleistungen zu der Diodenbrücke 28 unwirtschaftlich.

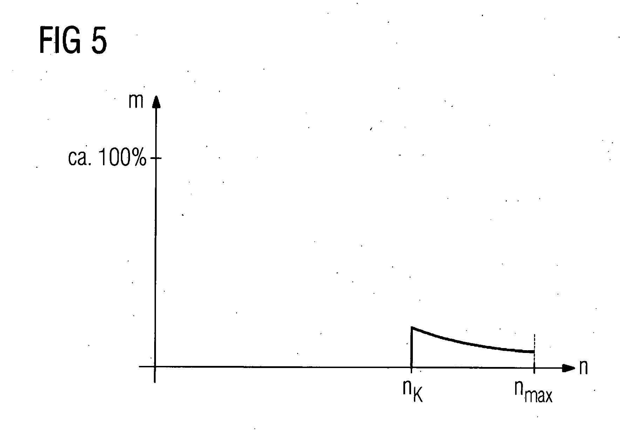

Ein Verlauf eines gewünschten Bremsmoments ist in dem Diagramm der FIG 5 näher dargestellt. Dieser Verlauf würde sich einstellen, wenn der externe Ankerkurzschluss bei Drehzahlen n ≤n_{K} wieder aufgehoben werden könnte.

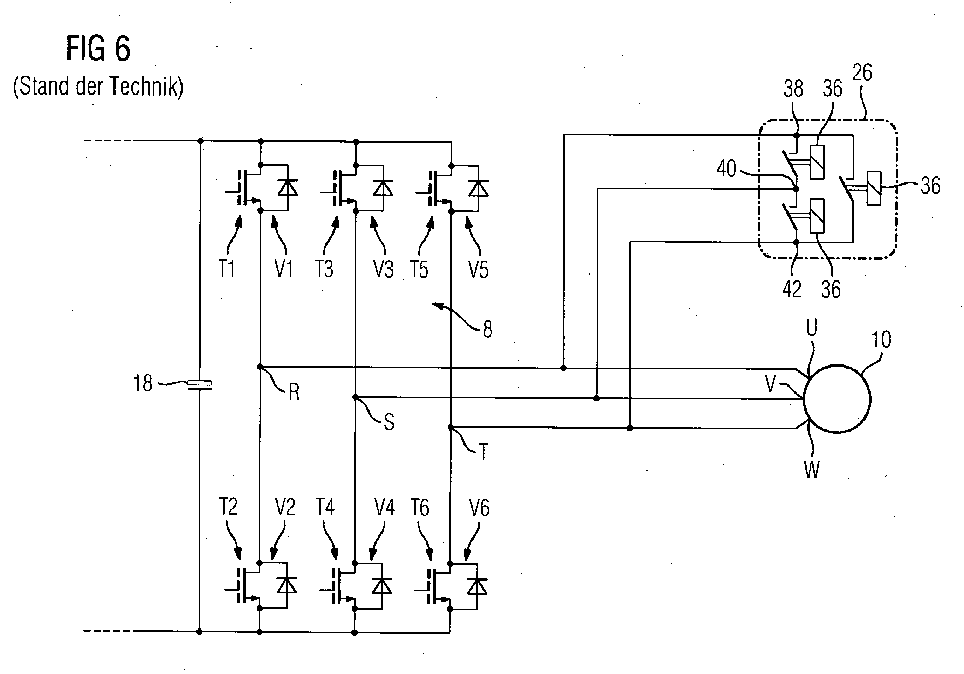

In der FIG 6 ist eine weitere Ausführungsform der Vorrichtung 26 dargestellt, die aus der EP 0 742 637 A1 bekannt ist. Bei dieser bekannten Ausführungsform der Vorrichtung 26 sind drei Schütze 36 vorgesehen, die elektrisch in Dreieck geschaltet sind. Jeweils ein Verbindungspunkt 38,40 und 42 zweier Schütze 36 ist mit einem ständerseitigen Anschluss U bzw. V bzw. W der permanent erregten Synchronmaschine 10 elektrisch leitend verbunden. Mittels dieser Schütze kann zu jedem beliebigen Zeitpunkt ein Ankerkurzschluss eingeschaltet und wieder aufgehoben werden. Selbst wenn ein Schütz 36 dieser Vorrichtung 26 ausfallen sollte, ist diese Vorrichtung 26 weiterhin in der Lage, einen externen Ankerkurzschluss zu initiieren. Durch eine begrenzte Anzahl zulässiger Schaltspiele unter Last ist die Ausführungsform der Vorrichtung 26 bei einem Antriebssystem 2 eines batteriebetriebenen Fahrzeugs nicht verwendbar. Außerdem beanspruchen elektromechanische Bauelemente einen größeren Einbauplatz als elektronische Bauelemente und ferner sind elektromechanische Bauelemente bei einem batteriebetriebenen Fahrzeug nicht mehr zeitgemäß. Mit dieser Ausführungsform der Vorrichtung 26 ist der Verlauf eines Bremsmoments gemäß FIG 5 generierbar.

Der Erfindung liegt nun die Aufgabe zugrunde, die bekannte Vorrichtung zum gesteuerten Kurzschließen ständerseitiger Anschlüsse einer permanent erregten Synchronmaschine derart weiterzubilden, dass keine elektromechanischen Bauelemente mehr verwendet werden müssen.

Diese Aufgabe wird durch ein Antriebssystem mit den in Anspruch 1 angegebenen Merkmalen gelöst.

Durch die Verwendung von drei Thyristoren anstelle von drei Schützen erhält man eine besonders kompakte Ausführungsform der Vorrichtung zum gesteuerten Kurzschließen ständerseitiger Anschlüsse einer permanenterregten Synchronmaschine. Werden diese drei Thyristoren nicht mehr angesteuert, fließen die einzelnen Phasenströme noch bis zu ihren natürlichen Nulldurchgängen weiter, ehe diese verlöschen.

Bei einer alternativen Ausgestaltung der Vorrichtung zum gesteuerten Kurzschließen ständerseitiger Anschlüsse einer permanent erregten Synchronmaschine sind anstelle von drei Schützen zwei Thyristorpaare vorgesehen. Jedes Thyristorpaar weist zwei Thyristoren auf, die antiparallel zueinander geschaltet sind. Mittels dieser Ausführungsform der Vorrichtung kann zu einem beliebigen Zeitpunkt der geschaltete Ankerkurzschluss wieder aufgehoben werden, indem die Thyristoren eines jeden Thyristorpaares nicht mehr angesteuert werden.

Bei einer vorteilhaften Ausführungsform der Vorrichtung zum gesteuerten Kurzschließen ständerseitiger Anschlüsse einer permanent erregten Synchronmaschine werden drei Thyristorpaare elektrisch in Stern geschaltet, wobei der Sternpunkt dieser drei Thyristorpaare mittels eines Widerstandes (Shunt-Widerstand) mit einem Sternpunkt eines Sternpunktbildners elektrisch leitend verbunden ist. Der Vorteil dieser Ausführungsform besteht darin, dass während des Betriebes des Antriebssystems eines batteriebetriebenen Fahrzeugs diese Vorrichtung auf Funktionstüchtigkeit getestet werden kann. Beim Test wird jeder Thyristor eingeschaltet und es wird festgestellt, ob eine Spannung am Sternpunkt der drei Thyristorpaare gegenüber dem Sternpunkt des Sternpunktbildners ansteht. Eine derartige Spannung entsteht am Shunt-Widerstand nur dann, wenn ein Strom durch diesen Widerstand fließen kann. Dieser Strom fließt nur, wenn der entsprechende Thyristor auch wirklich eingeschaltet hat. Dadurch kann zu beliebigen Zeitpunkten des Betriebes das Antriebssystem eines batteriebetriebenen Fahrzeugs festgestellt werden, ob die Vorrichtung zum gesteuerten Kurzschließen ständerseitiger Anschlüsse einer permanent erregten Synchronmaschine noch funktionstüchtig ist, so dass im Fehlerfall des selbstgeführten Stromrichters oder seiner Steuer- und Regeleinrichtung ein auftretendes Bremsmoment minimiert werden kann.

Zur weiteren Erläuterung der Erfindung wird auf die Zeichnung Bezug genommen, in der mehrere Ausführungsformen der Vorrichtung zum gesteuerten Kurzschließen ständerseitiger Anschlüsse einer permanent erregten Synchronmaschine eines Antriebssystems eines batteriebetriebenen Fahrzeugs nach der Erfindung schematisch veranschaulicht sind.
- FIG 1: zeigt ein Blockschaltbild eines bekannten Antriebssystems eines batteriebetriebenen Fahrzeugs, in der
- FIG 2: ist in einem Diagramm der Verlauf eines Bremsmomentes bei Ausfall eines selbstgeführten Stromrichters bzw. dessen Steuer- und Regeleinrichtung eines Antriebssystems nach FIG 1 veranschaulicht, in der
- FIG 3: ist in einem Diagramm der Verlauf eines Bremsmomentes bei einem geschalteten Ankerkurzschluss des selbstgeführten Stromrichters des Antriebssystems nach FIG 1 dargestellt, die
- FIG 4: zeigt ein Blockschaltbild des Antriebssystems nach FIG 1 mit einer Vorrichtung zum externen Schalten eines Ankerkurzschlusses, in der
- FIG 5: ist in einem Diagramm der Verlauf eines gewünschten Bremsmomentes im Fehlerfall des selbstgeführten Stromrichters bzw. dessen Steuer- und Regeleinrichtung des Antriebssystems nach FIG 1 veranschaulicht, die
- FIG 6: zeigt ein Blockschaltbild des Antriebssystems nach FIG 1 mit einer weiteren bekannten Ausführungsform einer Vorrichtung zum externen Schalten eines Ankerkurzschlusses, in den
- FIG 7 und 8: ist jeweils eine erfindungsgemäße Ausführungsform einer Vorrichtung zum externen Schalten eines Ankerkurzschlusses bei einem Antriebssystem gemäß FIG 1 dargestellt, und in
- FIG 9: ist ein Blockschaltbild einer vorteilhaften erfindungsgemäßen Ausführungsform einer Vorrichtung zum externen Schalten eines Ankerkurzschlusses bei einem Antriebssystem nach FIG 1 dargestellt.

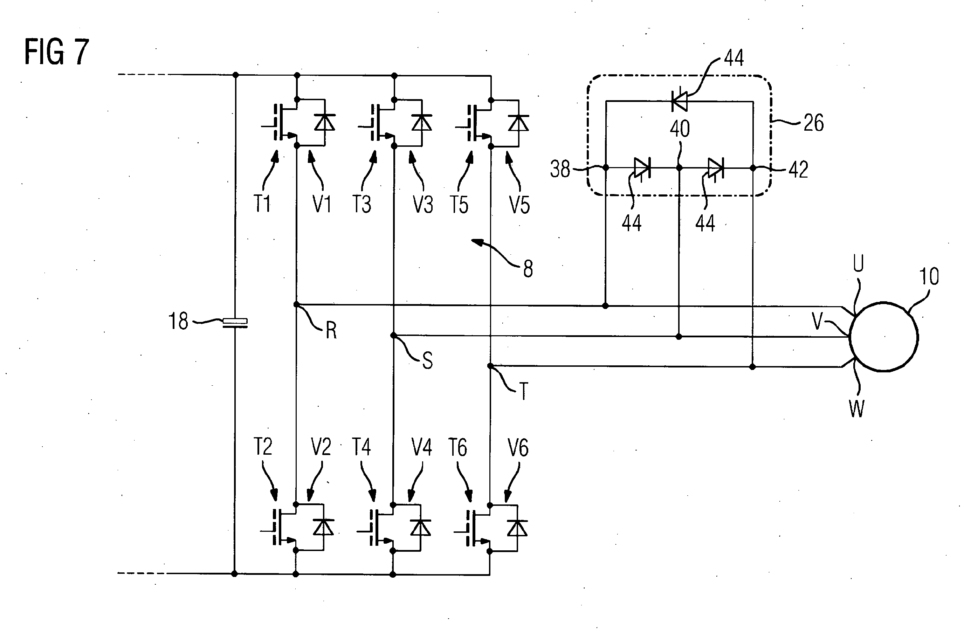

In der FIG 7 ist wegen der Übersichtlichkeit vom Antriebssystem 2 gemäß FIG 1 nur der Pufferkondensator 18, der selbstgeführte Stromrichter 8 und die permanent erregte Synchronmaschine 10 dargestellt. Außerdem zeigt dieses Blockschaltbild eine erfindungsgemäße Ausführungsform der Vorrichtung 26 mittels der ständerseitige Anschlüsse U, V und W der permanent erregten Synchronmaschine 10 für eine vorbestimmte Zeitspanne kurzgeschlossen werden können. Dazu weist diese Vorrichtung drei Thyristoren 44 auf, die elektrisch in Dreieck geschaltet sind. Jeweils ein Verbindungspunkt 38, 40 und 42 zweier Thyristoren 44 ist mit einem ständerseitigen Anschluss U bzw. V bzw. W der permanent erregten Synchronmaschine 10 elektrisch leitend verbunden. Sobald der IGBT-Pulsstromrichter 8 bzw. dessen Steuer- und Regeleinrichtung 24 infolge eines Fehlers ausfällt, insbesondere im Feldschwächbetrieb der permanent erregten Synchronmaschine 10, werden diese drei Thyristoren 44 derart angesteuert, dass diese eingeschaltet sind und bleiben. Zum Zeitpunkt, wenn die Drehzahl n der permanenterregten Synchronmaschine 10 auf den Drehzahlwert n_{K} abgesunken ist, werden die Zündsignale dieser drei Thyristoren 24 gesperrt. Dadurch fließen die einzelnen Phasenströme (Ständerströme) bis zu ihren natürlichen Nulldurchgängen weiter, ehe sie verlöschen. Ab diesem Zeitpunkt ist der extern geschaltete Ankerkurzschluss wieder aufgehoben, so dass kein Bremsmoment mehr erzeugt wird. Dieser gesteuerte Verlauf des Bremsmoments entspricht dem Verlauf des Bremsmoments gemäß FIG 5.

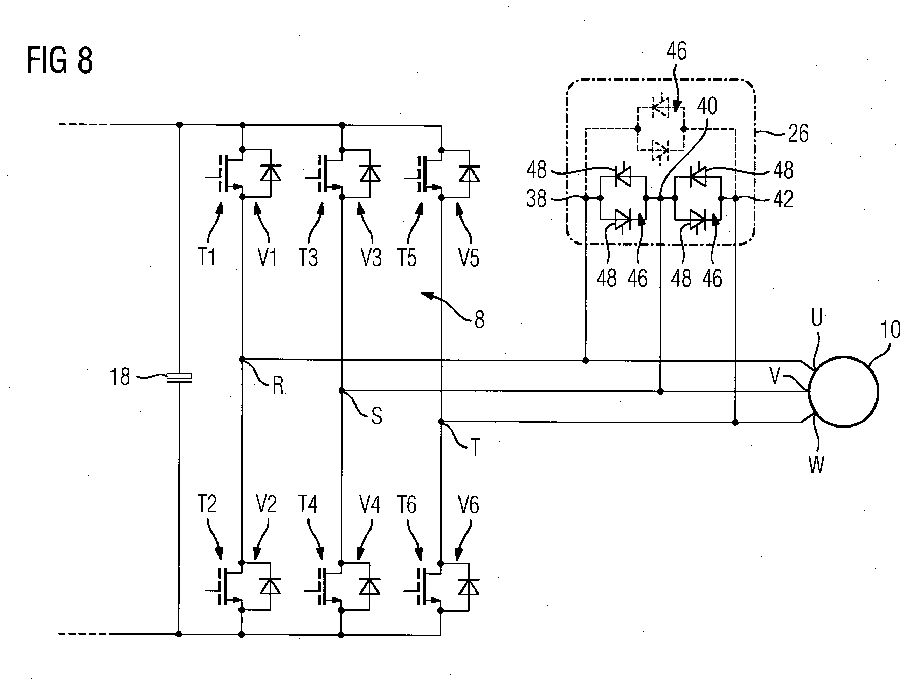

In der FIG 8 ist ein Teil des Blockschaltbild des Antriebssystems 2 gemäß FIG 1 mit einer alternativen Ausgestaltung der Vorrichtung 26 zum gesteuerten Kurzschließen ständerseitiger Anschlüsse U,V,W der permanent erregten Synchronmaschine 10 nach der Erfindung dargestellt. Diese alternative Ausführungsform der Vorrichtung 26 unterscheidet sich von der Ausführungsform der Vorrichtung 26 nach FIG 7 dadurch, dass nun wenigstens zwei Thyristorpaare 46 vorgesehen sind, die jeweils zwei Thyristoren 48 aufweisen, die jeweils antiparallel zueinander geschaltet sind. Es kann aber auch für jeden Thyristor 48 der Vorrichtung 26 nach FIG 7 ein Thyristorpaar 46 verwendet werden. Da diese Vorrichtung 26 auch nur mit zweit Thyristorpaaren 46 funktionsfähig ist, ist das dritte Thyristorpaar 46 gestrichelt dargestellt. Die Vorrichtung 26 mit zwei Thyristorpaaren 46 bildet eine so genannte Sparschaltung der Vorrichtung 26 mit drei Thyristorpaaren 46. Auch bei dieser Vorrichtung 26 werden im Fehlerfall des IGBT-Pulsstromrichters 8 bzw. dessen Steuer- und Regeleinrichtung 24 alle Thyristoren 48 derart angesteuert, dass diese für eine positive bzw. negative Halbwelle eines Ständerstromes (Phasenstrom) eingeschaltet sind. Zum Zeitpunkt des Drehzahl-Istwertes n_{K} werden alle Zündimpulse wieder gesperrt.

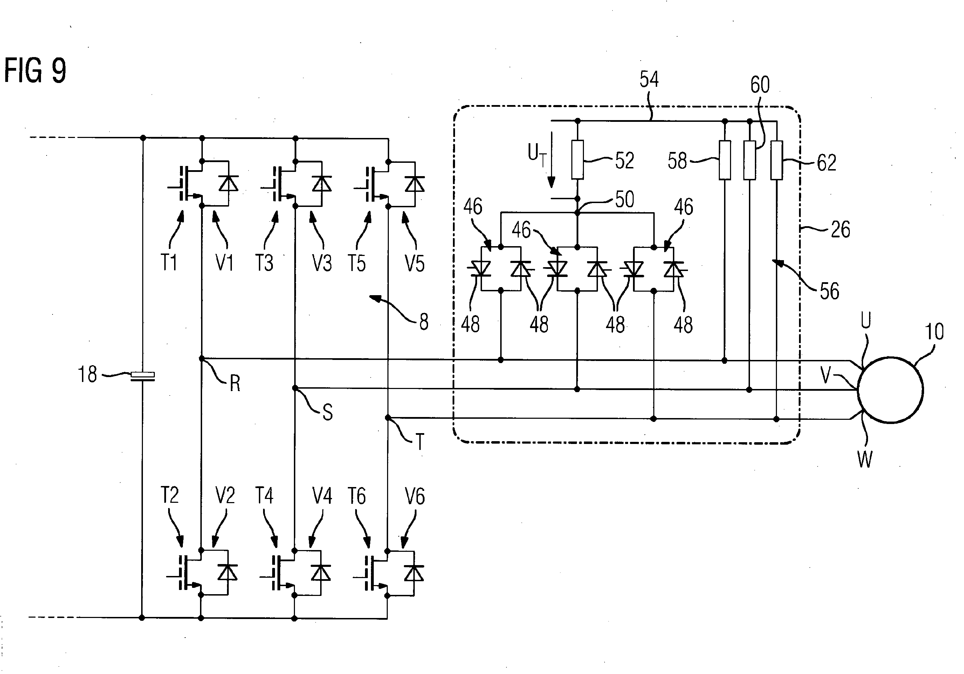

In der FIG 9 ist eine vorteilhafte Ausführungsform der Vorrichtung 26 zum gesteuerten Kurzschließen ständerseitiger Anschlüsse U, V und W der permanent erregten Synchronmaschine 10 nach der Erfindung näher dargestellt. Bei dieser vorteilhaften Ausführungsform der Vorrichtung 26 sind die drei Thyristorpaare 46 elektrisch in Stern geschaltet. Der Sternpunkt 50 dieser in Stern geschalteten Thyristorpaare 46 ist mittels eines Widerstandes (Shunt-Widerstand) mit einem Sternpunkt 54 eines Sternpunktbildners 56 elektrisch leitend verbunden. Dieser Sternpunktbildner 56 besteht aus drei hochohmigen Widerständen 58, 60 und 62, die elektrisch in Stern geschaltet sind. Die freien Enden dieser drei hochohmigen Widerstände 58, 60 und 62 sind jeweils mit einem ständerseitigen Anschluss U, V bzw. W der permanent erregten Synchronmaschine 10 elektrisch leitend verbunden.

Anstelle von Thyristorpaaren 46, die elektrisch in Stern geschaltet sind, können auch Antiparallelschaltungen eines Thyristors und einer Diode vorgesehen sein. Dadurch werden drei Thyristoren und drei Zündschaltungen eingespart, ohne dass etwas an der Funktionsweise dieser Vorrichtung 26 sich ändert. Diese Sternschaltung dreier Antiparallelschaltungen stellt eine so genannte Sparschaltung der Sternschaltung dreier Thyristorpaare 46 dar.

Der Vorteil dieser Ausführungsform der Vorrichtung 26 besteht darin, dass während des Betriebs des Antriebssystems 2 eines batteriebetriebenen Fahrzeugs zu beliebigen Zeitpunkten überprüft werden kann, ob die Thyristoren 48 der Vorrichtung 26 noch funktionstüchtig sind. Die Funktionstüchtigkeit der Thyristoren 48 gewährleistet, dass im Fehlerfall des IGBT-Pulsstromrichters 8 bzw. dessen Steuer- und Regeleinrichtung 24 das Auftreten des Bremsmoments minimiert werden kann, so dass das batteriebetriebene Fahrzeug spurstabil bleibt und der Fahrzeugführer nicht mehr vom plötzlichen Bremseingriff überrascht wird.

Bei diesem Test wird jeder Thyristor 48 einzeln derart angesteuert, dass dieser für eine Halbperiode eingeschaltet ist. Dadurch fließt ein Strom von einem wechselspannungsseitigen Anschluss R bzw. S bzw. T des IGBT-Pulsstromrichters 8 über den Shunt-Widerstand 52 zum künstlichen Sternpunkt 54 des Sternpunktbildners 56. Dadurch ist eine Spannung U_{T} am Shunt-Widerstand 52 abgreifbar. Diese Spannung U_{T} ist ein Indiz dafür, dass der Thyristor 48 eingeschaltet hat. Diese Testperiode wird bei jedem Thyristor 48 durchgeführt. Sobald wenigstens eine Spannung U_{T} von sechs möglichen Spannungen U_{T} nicht ermittelt werden kann, wird der Fahrzeuglenker auf diesen Fehler hingewiesen bzw. wird das Antriebssystem 2 in einem Notlaufbetrieb versetzt, damit ein plötzlich auftretendes Bremsmoment in Folge eines Fehlers im selbstgeführten Stromrichter 8 oder in seiner Steuer- und Regeleinrichtung 24 amplitudenmäßig viel geringer ausfällt.

## Patentansprüche

1. Antriebssystem (2) eines batteriebetriebenen Fahrzeugs mit einer permanent erregten Synchronmaschine (10), deren ständerseitige Anschlüsse (U,V,W) mit wechselspannungsseitigen Anschlüssen (R,S,T) eines selbstgeführten Stromrichters (8) elektrisch leitend verbunden sind, und mit einer Vorrichtung (26) zum gesteuerten Kurzschließen der ständerseitigen Anschlüsse (U,V,W) der permanent erregten Synchronmaschine (10), wobei diese Vorrichtung (26) drei Thyristorpaare (46) aufweist, die elektrisch in Stern geschaltet sind, dessen Sternpunkt (50) mittels eines Widerstands (52) mit einem Sternpunkt (54) eines Sternpunktbildners (56) elektrisch leitend verbunden ist und die freien Enden der Thyristorpaare (46) jeweils mit einem ständerseitigen Anschluss (U,V,W) der permanent erregten Synchronmaschine (10) verbunden sind.

2. Antriebssystem (2) nach Anspruch 1,
**dadurch gekennzeichnet, dass** jedes Thyristorpaar (46) zwei Thyristoren (48) aufweist, die elektrisch antiparallel zueinander geschaltet sind.

3. Antriebssystem (2) nach Anspruch 1 oder 2,
**dadurch gekennzeichnet, dass** jedes Thyristorpaar (46) einen Thyristor und eine Diode aufweist, die elektrisch antiparallel geschaltet sind.

4. Antriebssystem (2) nach einem der Ansprüche 1 bis 3,
**dadurch gekennzeichnet, dass** der Sternpunktbildner (56) drei hochohmige Widerstände (58,60,62) aufweist, die einerseits elektrisch mit dem Sternpunkt (54) des Sternpunktbildners (56) und andererseits jeweils mit einem ständerseitigen Anschluss (U,V,W) der permanent erregten Synchronmaschine (10) elektrisch leitend verbunden sind.

5. Antriebssystem (2) nach einem der Ansprüche 1 bis 4,
**dadurch gekennzeichnet, dass** die abschaltbaren Leistungshalbleiter (T1,...,T6) des selbstgeführten Stromrichters (8) Insulated-Gate-Bipolar-Transistoren sind.

6. Antriebssystem (2) nach einem der Ansprüche 1 bis 5,
**dadurch gekennzeichnet, dass** die abschaltbaren Leistungshalbleiter (T1,...,T6) des selbstgeführten Stromrichters (8) MOS-Feldeffekttransistoren sind.

## Claims

1. Drive system (2) for a battery-operated vehicle with a permanently excited synchronous machine (10), the stator-side ports (U, V, W) of said synchronous machine being electrically conductively connected to terminals (R, S, T) of a self-commutated converter (8) on the alternating-voltage side, and with a device (26) for the controlled short-circuiting of the ports (U, V, W) on the stator side of the permanently excited synchronous machine (10), wherein said device (26) has three thyristor pairs (46), said pairs being electrically connected in star, the neutral point (50) of said star being electrically conductively connected to a neutral point (54) of a neutral electromagnetic coupler (56) by means of a resistor (52) and each of the free ends of the thyristor pairs (46) being connected to a stator-side port (U, V, W) of the permanently excited synchronous machine (10).

2. Drive system (2) according to claim 1,
**characterised in that** each thyristor pair (46) has two thyristors (48) which are electrically connected to one another in an antiparallel arrangement.

3. Drive system (2) according to claim 1 or 2,
**characterised in that** each thyristor pair (46) has a thyristor and a diode which are electrically connected in an antiparallel arrangement.

4. Drive system (2) according to one of claims 1 to 3, **characterised in that** the neutral electromagnetic coupler (56) has three high-value resistors (58, 60, 62) which on the one hand are electrically conductively connected to the neutral point (54) of the neutral electromagnetic coupler (56) and, on the other hand, are each electrically conductively connected to a stator-side port (U, V, W) of the permanently excited synchronous machine (10).

5. Drive system (2) according to one of claims 1 to 4, **characterised in that** the gate turn-off power semiconductors (T1, ..., T6) of the self-commutated converter (8) are Insulated Gate Bipolar Transistors.

6. Drive system (2) according to one of claims 1 to 5, **characterised in that** the gate turn-off power semiconductors (T1, ..., T6) of the self-commutated converter (8) are MOS Field Effect Transistors.

## Revendications

1. Système ( 2 ) d'entraînement d'un véhicule fonctionnant sur batterie, comprenant un moteur ( 10 ) synchrone à excitation permanente, dont les bornes ( U , V , W ) du côté du stator sont reliées d'une manière conductrice de l'électricité à des bornes ( R , S , T ) du côté de la tension alternative d'un convertisseur ( 8 ) à commutation automatique, et comprenant un dispositif ( 26 ) de court-circuitage commandé des bornes ( U , V , W ) du côté du stator du moteur ( 10 ) synchrone à excitation permanente, ce dispositif ( 26 ) ayant trois paires ( 46 ) de thyristor, qui sont montées électriquement en étoile et dont le point ( 50 ) neutre est relié d'une manière conductrice de l'électricité à un point ( 54 ) neutre d'une mise à la terre ( 56 ) de point neutre et les extrémités libres des paires ( 46 ) de thyristor sont reliées respectivement à une borne ( U , V , W ) du côté du stator du moteur ( 10 ) synchrone à excitation permanente.

2. Système ( 2 ) d'entraînement suivant la revendication 1, **caractérisé en ce que** chaque paire ( 46 ) de thyristor à deux thyristors ( 48 ) qui sont montés électriquement tête-bêche l'un par rapport à l'autre.

3. Système ( 2 ) d'entraînement suivant la revendication 1 ou 2, caractérisé en ce chaque paire ( 46 ) de thyristor a un thyristor et une diode qui sont montés électriquement tête-bêche.

4. Système ( 2 ) d'entraînement suivant l'une des revendications 1 à 3, **caractérisé en ce que** la mise à la terre ( 56 ) de point neutre a trois résistances ( 58 , 60 , 62 ) de grande valeur, qui sont reliées de manière conductrice de l'électricité d'une part électriquement au point ( 54 ) neutre de la mise à la terre ( 56 ) de point neutre et d'autre part respectivement à une borne ( U , V , W ) du côté du stator du moteur ( 10 ) synchrone à excitation permanente.

5. Système ( 2 ) d'entraînement suivant l'une des revendications 1 à 4, **caractérisé en ce que** les semiconducteurs ( T1 , ... , T6 ) de puissance pouvant être bloqués du convertisseur ( 8 ) à commutation automatique sont des transistors bipolaires à grille isolée.

6. Système ( 2 ) d'entraînement suivant l'une des revendications 1 à 5, **caractérisé en ce que** les semiconducteurs ( T1 , ... , T6 ) de puissance pouvant être bloqués du convertisseur ( 8 ) à commutation automatique sont des transistors à effet de champ MOS.
